# EUROPÄISCHE PATENTANMELDUNG

(11) **EP 3 381 963 A1**
(43) Veröffentlichungstag der Anmeldung: **03.10.2018**
(21) Anmeldenummer: 17164364.6
(22) Anmeldetag: 31.03.2017
(51) Int. Cl.: C08G 59/18

(54) **HÄRTER FÜR EPOXIDHARZE**

(71) Anmelder: Worlée-Chemie GmbH, 22113 Hamburg (DE)
(72) Erfinder: Reinhold, Klaus, 89250 Senden (DE); Biemans, Toine, 21335 Lüneburg (DE); Meyer-Hevekerl, Wolf, 21357 Bardowick (DE); Galle, Reiner, 45326 Essen (DE); Müller, Joachim, 40885 Ratingen (DE); Feeken, Arno, 21614 Buxtehude (DE)
(74) Vertreter: Uexküll & Stolberg

(57) **Zusammenfassung**

Die vorliegende Erfindung betrifft ein Verfahren zur Herstellung eines Härters für Epoxidharze, bei welchem Verfahren in einem ersten Schritt aus einem aliphatischen oder alicyclischen Polyamin mit 2 bis 20 bzw. 6 bis 20 Kohlenstoffatomen und difunktioneller oder multifunktioneller Glycidyl-basierter Epoxidverbindung ein erstes Addukt hergestellt wird und/oder in einem zweiten Schritt aus einem aromatischen Polyamin mit 6 bis 20 Kohlenstoffatomen und difunktioneller oder multifunktioneller Glycidyl-basierter Epoxidverbindung ein zweites Addukt hergestellt wird, wobei das Molverhältnis von Polyamin zu Glycidyl-basierter Epoxidverbindung jeweils ≤ 3,3 ist, wobei der erste und der zweite Schritt getrennt voneinander durchgeführt werden, und in einem dritten Schritt das erste Addukt und/oder das zweite Addukt und/oder Beschleuniger und/oder Modifizierungsmittel sowie gegebenenfalls weitere Addukte oder Aminkomponenten kontaktiert werden, um den Härter zu formulieren, wobei das Modifizierungsmittel bereits im ersten bzw. zweiten Schritt zugesetzt werden kann, sowie danach erhältliche Härter und deren Verwendung in Epoxidharzen sowie daraus hergestellte Produkte.

## Beschreibung

Die vorliegende Erfindung betrifft ein Verfahren für die Herstellung von Härtern für Epoxidharze, die nach dem Verfahren erhältlichen Härter sowie vernetzbare (härtbare) Formulierungen auf Epoxidharzbasis, die die erfindungsgemäßen Härter enthalten.

Die vorliegende Erfindung bezieht sich insbesondere auf Härter für kalthärtende Epoxidharzsysteme (d.h. bei etwa Raumtemperatur, also bei etwa 20°C), die als Komponenten Stoffe enthalten, die gemäß der Polymerdefinition nach REACH (*Registration, Evaluation and Authorisation of Chemicals*) *a*ls Polymer anzusehen sind und daher vorteilhafterweise von einer Registrierung unter REACH ausgenommen sind.

Kalthärtende Epoxidharzsysteme werden für vielfältige Anwendungen im industriellen Bereich eingesetzt. Zu nennen sind hier unter anderem Fußbodenbeschichtungen, Grundierungen, hochgefüllte Mörtelbeläge, Haftbrücken, Klebstoffe, Anstriche, Beschichtung, Versiegelungen, Lacke und Farben. Auch eine Verwendung in Vergussmassen, Fugenmassen, im Werkzeug- und Formenbau und als Bindemittel im Polymerbeton oder in Verbundswerkstoffen ist möglich. Im Allgemeinen werden bei kalthärtenden Epoxidharzsystemen Polyamid- oder aminische Härter eingesetzt.

Die Herstellung derartiger Härter erfolgt typischerweise wie folgt. Es werden eine oder mehrere Diaminkomponenten (Monomere), hier mit MA1 und MA2 bezeichnet, zusammen mit einem flüchtigen organischen Stoff (VOC) in einem geeigneten Reaktor unter Schutzgas vorgelegt, homogen vermischt und auf die benötigte Reaktionstemperatur aufgeheizt. Bei speziellen Härtern wird vor der Zugabe der Diaminkomponente noch ein Beschleuniger in dem organischen Bestandteil gelöst und homogenisiert. In diesen Fällen wird/werden die Diaminkomponente(n)(Monomere) erst nach der Zugabe des Beschleunigers zugegeben. Im Anschluss wird eine Diglycidyl-basierte Epoxidverbindung (beispielsweise Bisphenol-A-diglycidether-Flüssigharz), hier mit LER bezeichnet, zugeführt, um ein Addukt zu bilden. Es können sich dabei drei verschiedene Addukte bilden: 1. MA1 - LER - MA2, 2. MA1 - LER - MA1 und 3. MA2 - LER - MA2. Die Verteilung dieser drei Addukte wurde bei dieser Herstellungsweise bisher nicht spezifisch bestimmt. Der Verfahrensschritt der Adduktierung wird durchgeführt, um relevante technische Eigenschaften, wie z. B. die Frühwasserfestigkeit signifikant zu verbessern. Diese Technik hat sich seit mehreren Jahrzehnten für eine Vielzahl von Anwendungsgebieten bewährt.

Die EP 1 813 634 A1 beschreibt ein Vernetzungsreagenz für Epoxidharze, das ein Reaktionsprodukt aus Diaminen und Diglycidylverbindungen umfasst.

Allerdings sind durch neue oder geänderte Verordnungen auf dem Gebiet des einschlägigen Chemikalienrechts, beispielsweise in der Europäischen Union (REACH-Verordnung), Mischaddukte (MA1 - LER - MA2) nicht mehr praktikabel, da die gesonderte Registrierung aller Mischaddukte sehr aufwendig ist.

Ein Ansatz für eine mögliche Lösung dieser Problematik wird in der WO 2014/186032 A1 beschrieben. Diese Anmeldung betrifft kalthärtende Epoxidsysteme und Härter für kalthärtende Epoxidsysteme sowie ein Verfahren zu deren Herstellung.

Die aus dem in der WO 2014/186032 A1 beschriebenen Verfahren resultierenden Produkte müssen jedoch nach wie vor als Stoffe in Rahmen von REACH registriert werden. Diese Registrierung ist mit einem deutlichen Mehraufwand an Zeit und Geld verbunden und schränkt die Entwicklungsmöglichkeiten deshalb erheblich ein.

Daher ist ein Verfahren anzustreben, das eine Registrierung der oben beschriebenen Addukte obsolet macht und damit nicht nur den Aufwand an Zeit und Geld deutlich reduziert, sondern auch die Innovationsperspektive im Bereich der Forschung und Entwicklung erheblich vergrößert.

Der Erfindung liegt somit die Aufgabe zu Grunde, Härter für Epoxidharze und ein Verfahren zur Herstellung derselben bereitzustellen, wobei die erhaltenen Härter von einer Registrierung unter REACH ausgenommen sein sollen. Weiterhin sollen die erhaltenen Härter weitere vorteilhafte anwendungsbezogene Eigenschaften wie zum Beispiel ein verbessertes Härtungsverhalten aufweisen.

### Zusammenfassung der Erfindung

Die obige Aufgabe wird durch ein Verfahren zur Herstellung eines Härters für Epoxidharze gelöst, bei welchem Verfahren
(i) aus einem aliphatischen oder alicyclischen Polyamin mit 2 bis 20 Kohlenstoffatomen, bzw. 6 bis 20 Kohlenstoffatomen und difunktioneller oder multifunktioneller Glycidyl-basierter Epoxidverbindung ein erstes Addukt hergestellt wird, wobei das Molverhältnis von Polyamin zu Glycidyl-basierter Epoxidverbindung ≤ 3,3 ist, und/oder
(ii) aus einem aromatischen Polyamin mit 6 bis 20 Kohlenstoffatomen und difunktioneller oder multifunktioneller Glycidyl-basierter Epoxidverbindung ein zweites Addukt hergestellt wird, wobei das Molverhältnis von Polyamin zu Glycidyl-basierter Epoxidverbindung ≤ 3,3 ist,
   wobei (i) und (ii) getrennt voneinander durchgeführt werden, und
(iii) das erste Addukt und/oder das zweite Addukt und/oder Beschleuniger und/oder Modifizierungsmittel sowie gegebenenfalls ein oder mehrere weitere Addukte oder Aminkomponenten miteinander kontaktiert wird/werden, um den Härter zu formulieren, wobei das Modifizierungsmittel bereits in Schritt (i) bzw. (ii) zugesetzt werden kann.

Die vorliegende Erfindung stellt weiterhin einen Härter für Epoxidharze zur Verfügung, der durch das oben beschriebene Verfahren erhältlich ist.

Die vorliegende Erfindung betrifft ferner eine vernetzbare Formulierung, die als kalthärtendes Epoxidharzsystem eingesetzt werden kann. Die erfindungsgemäße vernetzbare Formulierung umfasst den Härter, der nach dem erfindungsgemäßen Verfahren erhältlich ist, und geeignetes Epoxidharz wie flüssigen Bisphenol-A-diglycidylether oder flüssigen Bisphenol-F-diglycidylether, Novolack, festes Bisphenol A, difunktionelle Ester-basierte Epoxidverbindungen, mono-oder difunktionelle Reaktionsverdünner und/oder Mischungen derselben. Dementsprechend betrifft die vorliegende Erfindung auch die Verwendung des nach dem erfindungsgemäßen Verfahren erhältlichen Härters zur Aushärtung (Vernetzung) von Epoxidharzsystemen. Schließlich betrifft die vorliegende Erfindung Produkte für den Einsatz als Grundierung, Beschichtung, Lack, Farbe, Klebstoff, als Bindemittel für zum Beispiel Verbundwerkstoffe (Composites), in Vergussmassen, Fugenmassen, im Werkzeug- und Formenbau und als Bindemittel im Polymerbeton, die aus der erfindungsgemäßen vernetzbaren Formulierung durch Aushärten und gegebenenfalls weitere Verarbeitungsschritte erhältlich sind.

Weitere und bevorzugte Ausführungsformen der Erfindung werden in der nachfolgenden Beschreibung und in den abhängigen Ansprüchen offenbart.

Im Allgemeinen enthalten die im Folgenden beschriebenen Ausführungsformen des erfindungsgemäßen Härters die offenbarten wesentlichen und optionalen Bestandteile, können aber auch aus diesen bestehen. Dies gilt auch für die Formulierungen, in denen der Härter verwendet wird und die daraus erhältlichen Produkte.

Es wurde von den Erfindern überraschenderweise festgestellt, dass die erfindungsgemäßen Härter eine Reihe von vorteilhaften anwendungsbezogenen Eigenschaften aufweisen, wie zum Beispiel ein verbessertes Härtungsverhalten, insbesondere eine schnellere Durchhärtung.

Weiterhin erfüllen die nach dem erfindungsgemäßen Verfahren hergestellten Addukte mit einem Molverhältnis von Aminkomponente zu Glycidyl-basierter Epoxidverbindung von ≤ 3,3 die REACH-Definition eines Polymers, so dass sie vorteilhafterweise von einer Registrierung unter REACH ausgenommen sind.

### Polymerdefinition der ECHA (European Chemicals Agency)

Die ECHA hat in ihren "Leitlinien zu Monomeren und Polymeren" in der Version 2.0 vom April 2012 "Leitlinien zur Umsetzung von REACH", die Definition für ein Polymer vorgegeben. Danach ist ein Polymer eine Substanz, bei der
a) über 50 Prozent des Gewichts der Substanz aus Polymermolekülen besteht, und
b) die Menge an Polymermolekülen mit demselben Molekulargewicht weniger als 50 Prozent des Gewichts der Substanz ausmacht.

Ein Polymermolekül ist hierbei ein Molekül, dass eine Sequenz von mindesten 3 Monomereinheiten aufweist, welche kovalent an mindestens eine weitere Monomereinheit oder weitere Reaktanden gebunden ist.

### Detaillierte Beschreibung der Erfindung

### Addukte

Die Addukte werden durch Reaktion eines Polyamins (nachstehend auch als "Aminkomponente" bezeichnet) und einer Glycidyl-basierten Epoxidverbindung hergestellt.

Als Aminkomponente können aliphatische Amine, alicylische Amine, aromatisch-aliphatische (aralphatische) Amine und aromatische Amine verwendet werden, die mehr als eine Amingruppe aufweisen (Diamine, Triamine, Tetraamine, etc.) und somit auch als Polyamine bezeichnet werden können. Die erfindungsgemäßen Amine weisen insbesondere zwei Aminogruppen auf (Diamine). Die erfindungsgemäße Aminkomponente wird nachfolgend in Bezug auf erfindungsgemäße Ausführungsformen näher beschrieben. Dabei wird auf die Ausführungsform als Diamin Bezug genommen. Es sei jedoch darauf hingewiesen, dass die folgenden Ausführungen ebenso für die weiteren Polyamine (wie Tri- und Tetraamine etc.) gelten.

Erfindungsgemäß wird als Aminkomponente in dem ersten Addukt insbesondere ein aliphatisches oder alicylisches Diamin und als Aminkomponente in dem zweiten Addukt ein aromatisches Diamin eingesetzt. Diese Diamine können weitere funktionelle Gruppen und Heteroatome aufweisen, solange die wesentlichen charakteristischen Eigenschaften der Diamine erhalten bleiben.

Das aliphatische oder alicylische Diamin kann üblicherweise 2 bis 20 bzw. 6 bis 20 Kohlenstoffatome, vorzugsweise 6 bis 15, insbesondere 6 bis 12 Kohlenstoffatome aufweisen. In einer bevorzugten Ausführungsform weist das alicylische Diamin einen Cyclohexanring auf, der vorzugsweise mehrere Substituenten aufweist. Die Substituenten können vorzugsweise Aminogruppen, Alkylgruppen, insbesondere Methylgruppen, oder mit Amingruppen substituierte Alkylgruppen, wie einen Aminoethylgruppe sein. Die Substituenten können auch weitere funktionelle Gruppen und Heteroatome aufweisen, solange die charakteristischen wesentlichen Eigenschaften des Diamins erhalten bleiben. Vorzugsweise werden Alkylamine und Cycloalkylamine eingesetzt.

Das aromatische Diamin kann 6 bis 20 Kohlenstoffatome, vorzugsweise 6 bis 15, insbesondere 6 bis 10 Kohlenstoffatome aufweisen. In einer bevorzugten Ausführungsform weist das aromatische Diamin einen Benzolring auf, der mehrere Substituenten aufweist. Die Substituenten können vorzugsweise Aminogruppen, Alkylgruppen, insbesondere Methylgruppen, oder mit Aminogruppen substituierte Alkylgruppen sein. Die Substituenten können auch weitere funktionelle Gruppen und Heteroatome aufweisen, solange die charakteristischen wesentlichen Eigenschaften des Diamins erhalten bleiben.

In einer bevorzugten Ausführungsform wird bei der Herstellung des ersten Addukts als Diamin ein aliphatisches oder alicylisches Diamin mit 6 bis 12 Kohlenstoffatomen eingesetzt, wobei des aliphatische Diamin auf einer C₆-Methylenkette mit Methylsubstituenten und endständigen Aminogruppen beruht und wobei das alicyclische Diamin eine Cyclohexyleinheit umfasst, die Methylsubstituenten aufweist und bei der eine Aminogruppe unmittelbar an der Cyclohexyleinheit substituiert ist, während die andere als Aminoethylgruppe an der Cyclohexyleinheit substituiert ist, und/oder wird bei der Herstellung des zweiten Addukts als Diamin ein aromatisches Diamin eingesetzt, wobei das aromatische Diamin auf einem mit zwei Aminoethylgruppen substituierten Benzol beruht.

In einer besonders bevorzugten Ausführungsform wird bei der Herstellung des ersten Addukts 2,4,4,-Trimethylhexamethylendiamin als aliphatisches Diamin oder Isophorondiamin (IPDA) als alicylisches Diamin und/oder bei der Herstellung des zweiten Addukts Xylylendiamin (MXDA) als aromatisches Diamin verwendet.

Die erfindungsgemäße "Glycidyl-basierte Epoxidverbindung" ist eine Verbindung, die mindestens zwei Epoxygruppen in Form endständiger 2,3-Epoxypropoxygruppen (Glycidyl-) aufweist. Die Glycidyl-basierte Epoxidverbindung kann eine difunktionelle oder multifunktionelle Glycidyl-basierte Epoxidverbindung sein. Eine difunktionelle Glycidyl-basierte Epoxidverbindung weist zwei Glycidylgruppen auf, eine multifunktionelle Glycidyl-basierte Epoxidverbindung weist mehr als zwei Glycidylgruppen (drei, vier, etc.) auf. Die erfindungsgemäße difunktionelle oder multifunktionelle Glycidyl-basierte Epoxidverbindung wird nachfolgend in Bezug auf erfindungsgemäße Ausführungsformen als "Glycidyl-basierte Epoxidverbindung" näher beschrieben. Es sei jedoch darauf hingewiesen, dass die folgenden Ausführungen ebenso für difunktionelle wie für multifunktionelle Glycidyl-basierte Epoxidverbindungen gelten.

In einer bevorzugten Ausführungsform ist die Glycidyl-basierte Epoxidverbindung eine difunktionelle Glycidyl-basierte Epoxidverbindung.

Geeignete Glycidyl-basierte Epoxidverbindungen umfassen Digylcidyletherverbindungen mononuklearer divalenter Phenole wie Resorcin oder Hydrochinon, Digylcidyletherverbindungen multinuklearer divalenter Phenole wie 4,4'-Isoproylidendiphenol (Bisphenol A) oder 4,4'-Methylendiphenol (Bisphenol F), Digylcidyletherverbindungen von Diolen wie Ethylenglycol, Propylenglycol, Butandiol, und Hexandiol, und Digylcidyletherverbindungen aliphatischer, aromatischer, oder alicylischer zweiwertiger Säuren wie Maleinsäure, Fumarsäure, Itakonsäure, Bernsteinsäure, Glutarsäure, Korksäure, Adipinsäure, Azelainsäure, Sebacinsäure, Phthalsäure, Isophthalsäure, Terephthalsäure, und Cyclohexandicarbonsäure.

Bevorzugte Glycidyl-basierte Epoxidverbindungen sind unter anderem Bisphenol-A-diglycidylether, Bisphenol-F-diglycidether, Phenylgylcidylether, Tetrahydrophthalsäure-diglycidylester Hexahydrophthalsäure-diglycidylester, Triglycidylisocyanurat und Glycidylether aliphatischer Polyole. Die Erfindung ist jedoch nicht auf diese genannten Beispiele begrenzt.

Besonders bevorzugte Glycidyl-basierte Epoxidverbindungen sind Bisphenol-A-diglycidether und Bisphenol-F-diglycidether.

Das nach dem erfindungsgemäßen Verfahren hergestellte erste Addukt ist vorzugsweise ein Polymer, das von der Glycidyl-basierten Epoxidverbindung und dem aliphatischen oder alicyclischem Diamin abgeleitete Einheiten umfasst und ein Reaktionsprodukt gemäß der ECHA-Definition ist.

Das Molverhältnis von eingesetztem aliphatischem oder alicyclischem Diamin zu Glycidyl-basierter Epoxidverbindung beträgt weniger oder gleich 3,3, vorzugsweise weniger als 3,2, wie weniger als 3,1, wie weniger als 3,0, wie weniger als 2,9, wie weniger als 2,8, wie weniger als 2,7, wie weniger als 2,6, wie weniger als 2,5, wie weniger als 2,4, wie weniger als 2,3, wie weniger als 2,2, wie weniger als 2,1, wie weniger als 2,0, wie weniger als 1,9, wie weniger als 1,8, wie weniger als 1,7, wie weniger als 1,6, wie weniger als 1,5, jedoch nicht weniger als 1,0, und aus diesen Werten ableitbaren Bereichen. In einer bevorzugten Ausführungsform beträgt das Molverhältnis von eingesetztem aliphatischem oder alicyclischem Diamin zu Glycidyl-basierter Epoxidverbindung 1,5 bis 3,3 insbesondere 2,0 bis 3,0, wie 2,5 bis 3.

Das nach dem erfindungsgemäßen Verfahren hergestellte zweite Addukt ist vorzugsweise ein Polymer, das von der Glycidyl-basierten Epoxidverbindung und dem aromatischen Diamin abgeleitete Einheiten umfasst und ein Reaktionsprodukt gemäß der ECHA-Definition ist.

Das Molverhältnis von aromatischem Diamin zu Glycidyl-basierter Epoxidverbindung beträgt weniger oder gleich 3,3, vorzugsweise weniger als 3,2, wie weniger als 3,1, wie weniger als 3,0, wie weniger als 2,9, wie weniger als 2,8, wie weniger als 2,7, wie weniger als 2,6, wie weniger als 2,5, wie weniger als 2,4, wie weniger als 2,3, wie weniger als 2,2, wie weniger als 2,1, wie weniger als 2,0, wie weniger als 1,9, wie weniger als 1,8, wie weniger als 1,7, wie weniger als 1,6, wie weniger als 1,5, jedoch nicht weniger al 1,0, und aus diesen Werten ableitbaren Bereichen. In einer bevorzugten Ausführungsform beträgt das Molverhältnis von eingesetztem aromatischem Diamin zu Glycidyl-basierter Epoxidverbindung 1,5 bis 3,3 insbesondere 2,0 bis 3,0, wie 2,5 bis 3.

Bei der Herstellung der Addukte in den Schritten (i) oder (ii) des erfindungsgemäßen Verfahrens wird die Aminkomponente im Verhältnis zu der Glycidyl-basierten Epoxidverbindung generell in molarem Überschuss oder bis maximal zu einem Verhältnis 1 : 1 Mol eingesetzt, um sicherzustellen, dass das erste und das zweite Addukt aminofunktionelle Moleküle sind, die noch freie Aminogruppen aufweisen, wobei jedoch die den vorstehenden Abschnitten genannten Obergrenzen einzuhalten sind.

Bei der Herstellung des ersten Addukts kann das aliphatische oder alicyclische Diamin in einem Mengenbereich von 50 Gew.-% bis 99 Gew.-%, 65 Gew.-% bis 99 Gew.-%, und die Glycidyl-basierte Epoxidverbindung in einem Mengenbereich von 1 Gew.-% bis 50 Gew.-%, 1 Gew.-% bis 35 Gew.-%, eingesetzt werden, bezogen auf das Gewicht der Gesamtmenge von aliphatischem oder alicyclischem Diamin und Glycidyl-basierter Epoxidverbindung.

Bei der Herstellung des zweiten Addukts kann das aromatische Diamin in einem Mengenbereich von 50 Gew.-% bis 99 Gew.-%, insbesondere 55 Gew.% bis 99 Gew.-%, und die Glycidyl-basierte Epoxidverbindung in einem Mengenbereich von 1 Gew.-% bis 50 Gew.-%, insbesondere 1 Gew.-% bis 45 Gew.-%, eingesetzt werden, bezogen auf das Gewicht der Gesamtmenge von aromatischem Diamin und Glycidyl-basierter Epoxidverbindung.

Dabei gilt, dass die Mengen der Reaktanden so zu wählen sind, dass die vorstehend offenbarten Molverhältnisse von kleiner oder gleich 3,3 einzuhalten sind.

Generell werden die Eigenschaften des erfindungsgemäßen Härters maßgeblich durch die Menge des eingesetzten Addukts bestimmt. Die Art und das Mengenverhältnis der Reaktanden (Aminkomponente und Glycidyl-basierte Epoxidverbindung), die in dem ersten oder zweiten Addukt eingesetzt werden, haben einen deutlichen Einfluss auf die Viskosität und Reaktivität des jeweiligen Addukts.

Die Viskosität des ersten und zweiten Addukts ist maßgeblich für die einsetzbare Menge des jeweiligen Addukts in der kompletten Härterformulierung. Ist die Viskosität des ersten Addukts zu hoch, dann kann nur ein geringerer Anteil in der Härterformulierung verwendet werden. Ist das erste Addukt niedrigviskos, so kann ein höherer Anteil in der gesamten Härterformulierung verwendet werden. Ist die Viskosität des zweiten Addukts zu hoch, dann kann nur ein geringerer Anteil in der Härterformulierung verwendet werden. Ist das zweite Addukt niedrigviskos, so kann ein höherer Anteil in der gesamten Härterformulierung verwendet werden.

Es ist im Prinzip möglich, in der zu vernetzenden Formulierung auf Epoxidbasis, bezogen auf die Gesamtmenge, 1 Gew.-% bis 99 Gew.-% des ersten Addukts einzusetzen. Gleiches gilt auch für das zweite Addukt. In der Praxis ergibt sich das Verhältnis der beiden Addukte zueinander durch das gewünschte Eigenschaftsprofil der Härterformulierung.

In einer Ausführungsform umfasst der nach dem erfindungsgemäßen Verfahren in Stufe (iii) hergestellte Härter 1 Gew.-% bis 99 Gew.-% erstes Addukt, 1 Gew.-% bis 99 Gew.-% zweites Addukt, 1 Gew.-% bis 65 Gew.-% Modifizierungsmittel und 0,1 Gew.-% bis 45 Gew.-% Beschleuniger, wobei die Gewichtsprozentangaben jeweils auf das Gesamtgewicht des Härters bezogen sind, und die Mengen der aufgeführten Bestandteile so zu kombinieren sind, dass sie sich auf 100 Gew.-% ergänzen, soweit nicht noch weitere Komponenten vorhanden sind.

In einer bevorzugten Ausführungsform umfasst der nach dem erfindungsgemäßen Verfahren in Stufe (iii) hergestellte Härter 20 Gew.-% bis 60 Gew.-% erstes Addukt, 1 Gew.-% bis 40 Gew.-% zweites Addukt, 1 Gew.-% bis 45 Gew.-% Modifizierungsmittel und 0,1 Gew.-% bis 30 Gew.-% Beschleuniger, wobei die Gewichtsprozentangaben jeweils auf das Gesamtgewicht des Härters bezogen sind.

In einer weiteren bevorzugten Ausführungsform umfasst der nach dem erfindungsgemäßen Verfahren in Stufe (iii) hergestellte Härter 30 Gew.-% bis 50 Gew.-% erstes Addukt, 10 Gew.-% bis 30 Gew.-% zweites Addukt, 10 Gew.-% bis 40 Gew.-% Modifizierungsmittel und 0,5 Gew.-% bis 10 Gew.-% Beschleuniger, wobei die Gewichtsprozentangaben jeweils auf das Gesamtgewicht des Härters bezogen sind.

In einer weiteren bevorzugten Ausführungsform umfasst der in dem erfindungsgemäßen Verfahren in Stufe (iii) hergestellte Härter 35 Gew.-% bis 45 Gew.-% erstes Addukt, 15 Gew.-% bis 25 Gew.-% zweites Addukt, 15 Gew.-% bis 30 Gew.-% oder 40 Gew.-% Modifizierungsmittel und 1 Gew.-% bis 6 Gew.-% Beschleuniger, wobei die Gewichtsprozentangaben jeweils auf das Gesamtgewicht des Härters bezogen sind.

Das erste und das zweite Addukt werden üblicherweise getrennt voneinander hergestellt, wobei die Reihenfolge der Herstellung beliebig ist. Die Adduktierung findet im Allgemeinen in einem Modifizierungsmittel statt, wie nachstehend näher beschrieben wird. Der Temperaturbereich liegt dabei üblicherweise zwischen 60°C und 120°C und wird über verfahrenstechnische Methoden wie gewünscht gezielt gesteuert.

Bei den hier beschriebenen Beispielen liegt das Temperaturfenster in einem Bereich von 75°C bis 95°C. Dabei werden das Modifizierungsmittel und die Aminkomponente vorgelegt und homogenisiert. Anschließend wird die Glycidyl-basierte Epoxidverbindung unter Rühren zugeführt. Um eine vollständige Umsetzung der Glycidyl-basierten Epoxidverbindung zu erreichen, wird das Gemisch ausreichend lange, beispielsweise mindestens 2h lang, unter Rühren im angestrebten Temperaturbereich gehalten.

Anschließend werden gegebenenfalls das andere und weitere Addukt(e), Beschleuniger und weitere Modifizierungsmittel, sowie gegebenenfalls zusätzliche Amine, wie nachstehend näher beschrieben, sowie gegebenenfalls weitere übliche Bestandteile in angestrebten Verhältnissen zugegeben und homogenisiert. Die Zugabe des Modifizierungsmittels und/oder des Beschleunigers kann auch bereits in Schritt (i) oder Schritt (ii) erfolgen.

Durch die getrennte Herstellung der Addukte kann ausgeschlossen werden, dass sich Mischaddukte aus unterschiedlichen Aminen bilden.

### Weitere Addukte und/oder Aminkomponenten

Neben dem ersten und zweiten Addukt kann der erfindungsgemäße Härter noch ein oder mehrere weitere Addukte und/oder ein oder mehrere Aminkomponenten umfassen, die aus Aminen oder aminofunktionellen Reaktionsprodukten von Aminen und einem Stoff, der zwei oder mehr Epoxidgruppen aufweist, abgeleitet sind.

Die Addukte können insbesondere eine Aminkomponente, wie sie oben ausführlich beschrieben ist, und eine Glycidyl-basierte Epoxidverbindung, wie sie ebenfalls bereits oben ausführlich beschrieben ist, umfassen. Diese weiteren Addukte weisen ebenfalls ein Molverhältnis von eingesetzter Aminkomponente zu Glycidyl-basierter Epoxidverbindung von ≤ 3,3 auf.

In einer bevorzugten Ausführungsform umfassen diese weiteren Addukte oder Aminkomponenten Amine aus der Gruppe bestehend aus aliphatischen Aminen, alicyclischen Aminen, aromatischaliphatischen Aminen und aromatischen Aminen und deren Mischungen. Auf die weiteren oben ausführlich offenbarten Ausführungsformen wird an dieser Stelle ausdrücklich Bezug genommen.

### Beschleuniger

Für den erfindungsgemäßen Prozess geeignete Beschleuniger sind unter anderem Hydroxybenzoesäuren, Diphenlymethan-Derivate, Erdalkalinitrate, Wasser, ein- und zweiwertige Phenole, Mannichbasen, Stoffen mit carboxylierten und/oder phenolischen und/oder tertiären Aminen und deren Mischungen

Die im erfindungsgemäßen Härter eingesetzten Beschleuniger können beispielsweise Verbindungen ausgewählt aus der Gruppe bestehend aus Salicylsäure, Bisphenol-A, Bisphenol-F, Calciumnitrat, Wasser, ein- und zweiwertige Phenole, Mannichbasen, Stoffen mit carboxylierten und/oder phenolischen und/oder tertiären Aminen und deren Mischungen sein. Die erfindungsgemäß einsetzbaren Beschleuniger sind jedoch nicht auf diese genannten Beispiele begrenzt.

In einer bevorzugten Ausführungsform ist der Beschleuniger eine Verbindung ausgewählt aus der Gruppe bestehend aus Salicylsäure, Calciumnitrat, ein- und zweiwertigen Phenolen, Wasser, und Mannichbasen und deren Mischungen.

Beschleuniger werden vorzugsweise in einer Menge von 0,1 Gew.-% bis 45 Gew.-% eingesetzt, wobei die Gewichtsprozentangaben jeweils auf das Gesamtgewicht der Härterformulierung bezogen sind.

### Modifizierungsmittel

Der erfindungsgemäße Härter kann ferner geeignete Modifizierungsmittel enthalten. Modifizierungsmittel ist ein verbreiteter Begriff auf dem Gebiet der Härterherstellung und Fachleute wissen, was unter diesem Begriff zu verstehen hat.

Unter anderem dienen Modifizierungsmittel dazu, die Viskosität abzusenken und die Oberflächenqualität und Frühwasserbeständigkeit zu verbessern. Außerdem kann die Härtungsgeschwindigkeit durch die Zugabe von geeignetem Modifizierungsmittel beeinflusst werden.

Die in dem erfindungsgemäßen Prozess zu verwendenden Modifizierungsmittel können auch als Verschnittmittel bezeichnet werden. Unter Verschnittmitteln sind Produkte zu verstehen, die nicht mit den Bindemittelkomponenten reagieren, also praktisch flüssige Füllstoffe darstellen. Sie werden unter Gesichtspunkten der Verbesserung einer Reihe von technologischen Eigenschaften eingesetzt.

Modifizierungsmittel/Verschnittmittel können Eigenschaften wie die Reaktivität, den Verlauf und das Harz-Härter-Mischungsverhältnis einstellen.

Für das erfindungsgemäße Verfahren geeignete Modifizierungsmittel sind unter anderem styrolisierte Kohlenwasserstoffharze, (alkylsubstituiertes) styrolisiertes Phenol, substituiertes Napthalin, aromatische Alkohole, Polyalkylenglykole, hochsiedende Alkohole und deren Mischungen.

Modifizierungsmittel können beispielsweise Verbindungen ausgewählt aus der Gruppe bestehend aus styrolisierten Kohlenwasserstoffharzen, methylstyrolisiertem Phenol, Diisopropylnaphtaline, Benzylalkohole, Polyalkylenglykole, Polyalkylenglykolether und hochsiedende Alkohole und deren Mischungen umfassen. Die erfindungsgemäß einsetzbaren Modifizierungsmittel sind jedoch nicht auf diese genannten Beispiele begrenzt.

In einer bevorzugten Ausführungsform ist das Modifizierungsmittel eine Verbindung ausgewählt aus der Gruppe bestehend aus Benzylalkohol, methylstyrolisiertem und Diisopropylnaphthalin und deren Mischungen.

Modifizierungsmittel werden in der Regel in einer Menge von 0,1 Gew.-% bis 65 Gew.-% eingesetzt, wobei die Gewichtsprozentangaben jeweils auf das Gesamtgewicht des Härters bezogen sind.

### Vernetzbare (härtbare) Formulierung

Die vorliegende Erfindung betrifft auch vernetzbare Formulierungen, die den erfindungsgemäßen Härter sowie eine geeignete Epoxidharzkomponente enthalten, wie flüssigen Bisphenol-A-diglycidylether, flüssigen Bisphenol-F-diglycidylether, Novolack, festes Bisphenol A, difunktionelle auf einem Ester basierende Epoxidverbindungen, mono- oder difunktionelle Reaktionsverdünner und/oder Mischungen derselben umfasst.

Beispiele für monofunktionelle Reaktionsverdünner, die in dem erfindungsgemäßen Verfahren eingesetzt werden können sind C₁₂-bis C₁₄-Monoglycidylether, C₁₃- bis C₁₅-Monoglycidylether, Cadura E10 (erhältlich von Hexion), ortho-Kresylglycidether, Ethylhexylglycidether, p-tertiärer Butylphenylglycidether.

Beispiele für difunktionelle Reaktionsverdünner sind 1,6-Hexandioldiglycidether, 1,4 Butandioldiglycidether und Neopentyldiglycidether.

In einer bevorzugten Ausführungsform umfassen die vernetzbaren Formulierungen den Härter in einer Menge von 0,7 Aminäquivalente bis 1,3 Aminäquivalente und die Glycidyl-basierter Epoxidverbindung in einer Menge von 0,7 Epoxidäquivalente bis 1,3 Epoxidäquivalente, bezogen auf alle im Härter nach dem Ende der Herstellungsverfahrens vorhandenen Amino- und Epoxidgruppen.

Aus der erfindungsgemäßen vernetzbaren Formulierung können dann durch Vernetzung (Aushärtung) und gegebenenfalls weitere Verarbeitungsschritte Produkte für den Einsatz als Grundierung, Beschichtung, Lack, Farbe, Klebstoff, als Bindemittel für zum Beispiel Verbundswerkstoffe, in Vergussmassen, Fugenmassen, im Werkzeug- und Formenbau und als Bindemittel im Polymerbeton hergestellt werden.

### Beispiele

### Herstellung eines Härters

Im Folgenden wird die Adduktherstellung eines erfindungsgemäßen Ausführungsbeispiels beschrieben. Als alicylisches Diamin wird hierbei IPDA, als aromatisches Diamin MXDA und als Glycidyl-basierter Epoxidverbindung Epikote 828 (erhältlich von Hexion) in einem Molverhältnis, IPDA bzw. MXDA zu Epikote 828 von 2,9 zu 1 eingesetzt.

Es werden 176 Gramm Benzylalkohol in einem Vierhalsrundkolben vorgelegt. Mit Hilfe eines Heizpilzes wird die Vorlage auf 40 °C temperiert. 1,4 Mol IPDA oder MXDA werden zu dosiert. Unter Rühren werden 0,5 Mol des auf 60 °C vorgewärmten Epoxidharz, Epikote 828 (Hexion), zugegeben. Durch die Zugabe von Epikote 828 steigt die Temperatur auf 80 °C an. Mittels der Zugabegeschwindigkeit und Kühlung wird die Temperatur auf 80 °C gehalten. Nach der Zudosierung von Epikote 828 wird die Mischung 2 Stunden bei 80 °C gerührt. Danach ist davon auszugehen, dass eine vollständige Umsetzung des Epikote 828 mit IPDA oder MXDA erfolgt ist. Über eine Analyse mittels GPC/PI wurde festgestellt, dass der daraus entstandene Stoff die Polymerdefinition nach REACH erfüllt. Damit werden zwei getrennte Addukte erhalten, die im Härter verwendet werden.

**Tabelle 1: Vergleich marktüblicher und erfindungsgemäßer Härtern**

| | Marktüblicher Härter (Gew.%) | Erfindungsgemäß (Gew.%) |
|---|---|---|
| IPDA-Addukt | - | 40 |
| MXDA-Addukt | - | 20 |
| Epikote 828 | 12 | - |
| IPDA | 41 | 10 |
| MXDA | 7 | 4 |
| Benzylalkohol | 40 | 23 |
| Beschleuniger N,N-Dimethylbenzylomin (DMBA) von BASF | - | 3 |

**Tabelle 2: Shore D Härteentwicklung (24h/RT)**

| | Marktüblicher Härter | Erfindungsgemäß |
|---|---|---|
| 16 Std. | 46 | 55 |
| 24 Std. | 70 | 70 |
| 48 Std. | 77 | 76 |
| 7 Tage | 81 | 79 |

**Tabelle 3: Pendelhärte nach König (200 µm; 24h/RT)**

| | Marktüblicher Härter | Erfindungsgemäß |
|---|---|---|
| 16 Std. | 28 | 30 |
| 24 Std. | 64 | 66 |
| 48 Std. | 98 | 116 |
| 7 Tage | 158 | 166 |

**Tabelle 4: Prüfmethoden**

| Methode | Einheit | Norm | Probekörper |
|---|---|---|---|
| Shore D Härte | keine | DIN EN ISO 21509 | D = ca. 4mm |
| Pendelhärte nach König | Sek. | DIN EN ISO 1522 | Film auf Glasplatte (150 - 200 µm) |

## Patentansprüche

1. Verfahren zur Herstellung eines Härters für Epoxidharze, bei welchem Verfahren
(i) aus einem aliphatischen oder alicyclischen Polyamin mit 2 bis 20 Kohlenstoffatomen, bzw. 6 bis 20 Kohlenstoffatomen und difunktioneller oder multifunktioneller Glycidyl-basierter Epoxidverbindung ein erstes Addukt hergestellt wird, wobei das Molverhältnis von Polyamin zu Glycidyl-basierter Epoxidverbindung ≤ 3,3 ist, und/oder
(ii) aus einem aromatischen Polyamin mit 6 bis 20 Kohlenstoffatomen und difunktioneller oder multifunktioneller Glycidyl-basierter Epoxidverbindung ein zweites Addukt hergestellt wird, wobei das Molverhältnis von Polyamin zu Glycidyl-basierter Epoxidverbindung ≤ 3,3 ist,
wobei (i) und (ii) getrennt voneinander durchgeführt werden, und
(iii) das erste Addukt und/oder das zweite Addukt und/oder Beschleuniger und/oder Modifizierungsmittel sowie gegebenenfalls ein oder mehrere weitere Addukte oder Aminkomponenten kontaktiert wird/werden, um den Härter zu formulieren, wobei das Modifizierungsmittel bereits in Schritt (i) bzw. (ii) zugesetzt werden kann.

2. Verfahren nach Anspruch 1, bei dem das aliphatische oder alicyclische Polyamin 6 bis 15 Kohlenstoffatome, vorzugsweise 8 bis 12 Kohlenstoffatome aufweist und/oder das aromatische Polyamin 6 bis 15 Kohlenstoffatome, vorzugsweise 6 bis 10 Kohlenstoffatome aufweist.

3. Verfahren nach Anspruch 1 oder 2, bei dem das aliphatische oder alicyclische Polyamin ein alicyclisches Polyamin ist.

4. Verfahren nach einem der vorhergehenden Ansprüche, bei dem die Glycidyl-basierte Epoxidverbindung eine difunktionelle Glycidyl-basierte Epoxidverbindung und/oder das aliphatische oder alicyclische Polyamin ein aliphatisches oder alicyclisches Diamin und/oder das aromatische Polyamin ein aromatisches Diamin ist, wobei insbesondere alle diese Komponenten difunktionell sind.

5. Verfahren nach einem der vorhergehenden Ansprüche, bei dem das aliphatische oder alicyclische Polyamin Isophorondiamin ist und/oder das aromatische Polyamin Xylylendiamin ist.

6. Verfahren nach einem der vorhergehenden Ansprüche, bei dem bei der Herstellung des ersten Addukts aliphatisches oder alicyclisches Polyamin und Glycidyl-basierte Epoxidverbindung in einem Molverhältnis von Polyamin zu Glycidyl-basierter Epoxidverbindung von weniger als 3, vorzugsweise weniger als 2, jedoch nicht weniger als 1,5 eingesetzt werden und/oder bei dem bei der Herstellung des zweiten Addukts aromatisches Polyamin und Glycidyl-basierte Epoxidverbindung in einem Molverhältnis von Polyamin zu Glycidyl-basierter Epoxidverbindung von weniger als 3, vorzugsweise weniger als 2 jedoch nicht weniger als 1 eingesetzt werden.

7. Verfahren nach einem der vorhergehenden Ansprüche, bei dem das Modifizierungsmittel eine Verbindung ausgewählt aus der Gruppe bestehend aus Benzylalkohol, methylstyrolisiertem Phenol, Diisopropylnaphthalin und Mischungen derselben ist.

8. Verfahren nach einem der vorhergehenden Ansprüche, bei dem der Beschleuniger eine Verbindung ausgewählt aus der Gruppe bestehend aus Salicylsäure, Calciumnitrat, ein- und zweiwertigen Phenolen, Wasser, Mannichbasen und Mischungen derselben ist.

9. Verfahren nach einem der vorhergehenden Ansprüche, bei dem bei der Herstellung des ersten Addukts 65 Gew.-% bis 99 Gew.-% aliphatisches oder alicylisches Polyamin und 1 Gew.-% bis 35 Gew.-% Glycidyl-basierte Epoxidverbindung eingesetzt werden, wobei die Gewichtsprozentangaben jeweils auf das Gewicht der Gesamtmenge des Polyamins und der Epoxidverbindung bezogen sind und/oder bei der Herstellung des zweiten Addukts 55 Gew.-% bis 99 Gew.-% aromatisches Polyamin und 1 Gew.-% bis 45 Gew.-% Glycidyl-basierte Epoxidverbindung eingesetzt werden, wobei die Gewichtsprozentangaben jeweils auf das Gewicht der Gesamtmenge des Polyamins und der Epoxidverbindung bezogen sind.

10. Verfahren nach einem der vorhergehenden Ansprüche, bei dem die in Stufe (iii) hergestellte Härterformulierung 1 Gew.-% bis 99 Gew.-% erstes Addukt, 1 Gew.-% bis 99 Gew.-% zweites Addukt, 1 Gew.-% bis 65 Gew.-% Modifizierungsmittel und 0,1 Gew.-% bis 45 Gew.-% Beschleuniger umfasst, vorzugsweise 30 Gew.-% bis 50 Gew.-% erstes Addukt, 10 Gew.-% bis 30 Gew.-% zweites Addukt, 10 Gew.-% bis 35 Gew.-% Modifizierungsmittel und 0,5 Gew.-% bis 10 Gew.-% Beschleuniger, wobei die Gewichtsprozentangaben jeweils auf das Gesamtgewicht der Härterformulierung bezogen sind.

11. Verfahren nach einem der vorhergehenden Ansprüche bei dem ferner ein oder mehrere weitere Addukte und oder weitere Aminkomponenten, die Amine oder aminofunktionelle Reaktionsprodukte aus Aminen mit einem Stoff, der zwei oder mehr Epoxidgruppen aufweist, umfassen, mit dem ersten Addukt und/oder zweiten Addukt und/oder Beschleuniger und Modifizierungsmittel aus Schritt (iii) kontaktiert werden, wobei die weiteren Addukte ein Molverhältnis von Polyamin zu Glycidyl-basierter Epoxidverbindung ≤ 3,3 aufweisen.

12. Härter, der gemäß dem Verfahren nach einem der vorhergehenden Ansprüche erhältlich ist.

13. Verwendung eines Härters gemäß Anspruch 12 oder hergestellt gemäß dem Verfahren nach einem der vorgehenden Ansprüche 1 bis 11 für die Härtung von Epoxidharzsystemen.

14. Vernetzbare Formulierung, die
a) Härter gemäß Anspruch 12 oder hergestellt gemäß dem Verfahren nach einem der vorgehenden Ansprüche 1 bis 11, und
b) Epoxidharz, insbesondere flüssigen Bisphenol-A-diglycidylether, flüssigen Bisphenol-F-diglycidylether, Novolack, festes Bisphenol A, difunktionelle auf einem Ester-basierende Epoxidverbindungen, mono- oder difunktionelle Reaktionsverdünner und/oder Mischungen derselben umfasst,
wobei die Formulierung den Härter vorzugsweise in einer Menge von 0,7 bis 1,3 Aminäquivalenten und die Glycidyl-basierte Epoxidverbindung in einer Menge von 0,7 bis 1,3 Epoxidäquivalenten umfasst.

15. Produkte für den Einsatz als Grundierung, Beschichtung, Lack, Farbe, Klebstoff, als Bindemittel zum Beispiel für Verbundswerkstoffe, in Vergussmassen, Fugenmassen, im Werkzeug- und Formenbau und als Bindemittel im Polymerbeton, die aus der vernetzbaren Formulierung gemäß Anspruch 14 erhältlich sind.
